# EUROPEAN PATENT SPECIFICATION

(11) **EP 4 099 800 B1**
(45) Date of publication and mention of the grant of the patent: **27.03.2024**
(21) Application number: 22175812.1
(22) Date of filing: 27.05.2022
(51) Int. Cl.: H05B 3/86, G01S 13/931, H01Q 1/02, B32B 37/18, B30B 15/06

(54) **METHOD FOR MANUFACTURING A RADAR OR LIDAR PROTECTIVE LENS**
VERFAHREN ZUR HERSTELLUNG EINER RADAR- ODER LIDAR-SCHUTZLINSE
PROCEDE DE FABRICATION D'UNE LENTILLE DE PROTECTION RADAR OU LIDAR

(30) Priority: 31.05.2021 IT 202100014246
(43) Date of publication of application: 07.12.2022
(73) Proprietor: R.I.CO. S.r.l., 60022 Castelfidardo (AN) (IT)
(72) Inventor: SARACENI, Mattia, 60027 Osimo (AN) (IT)
(74) Representative: Fiume, Orazio

(56) References cited:
- JP-A- 2004 017 146
- US-A- 2 222 742
- US-A- 4 875 966
- US-A1- 2020 196 394

## Description

### Field of the invention

The present invention relates to the manufacture of radar or lidar protection lenses, in particular in the automotive field.

### State of the art

Radar / Lidar need protection or lens, resistant to external agents. Such protection must ensure that the device functions properly, i.e., it must not reduce its efficiency, meaning that it must be transparent to the operation of the Radar/Lidar. Another problem is the impact caused by cold climates: the ice that forms in the cover / support blinds the device.

To solve this problem, a resistance is inserted into the lens, usually a metal wire with a diameter in the order of microns powered by an electrical source.

The implementation of the resistance in the plastic material that defines the lens is particularly complex given the need to create a circuit that provides for a good distribution of heat over the entire surface and that does not hinder the performance of the Radar/Lidar.

US 2020/196394 A1 discloses a method for manufacturing a radar or Lidar protective lens comprising the following steps: arranging a first polycarbonate sheet, laying a resistive wire, arranging a polycarbonate second sheet, superimposed on the first sheet, creating a sandwich with the first sheet and the resistive wire, and press-forming of the sandwich.

The methods currently in use significantly impact the finish of the piece, in particular the aesthetic and optical properties.

Currently in the Automotive market there are various solutions for laying wires on polycarbonate but they are particularly complex and expensive both in the application and in the process.

### Summary of the invention

The object of the present invention is a method for for manufacturing a radar or Lidar protective lens comprising the following steps:
- Preparation of a matrix of pins projecting from a support plate defining a bench of a press,
- Arranging a first pre-drilled polycarbonate sheet so that the pins pass through corresponding openings of the first sheet,
- Laying a resistive wire on the pins in order to create an electric coil,
- Arranging a polycarbonate second sheet superimposed on the first sheet, creating a sandwich with the first sheet and the resistive wire,
- Press-forming of the sandwich by means of a heated mobile unit equipped with a surface complementary to the sandwich and possibly with the pins that project beyond the sandwich or equipped with a flat surface with and wherein the pins are retracted into the support Co-molding of the sandwich in order to coat a first face of the sandwich and to make the finished product uniform, making it transparent and occluding said passing through openings.

The pins can have an extension that does not interfere with the laying of the second sheet. Or the second sheet can be pre-punched like the first sheet. Or the pins may be retractable and spring loaded, so that the second sheet temporarily rests on the pins, but when the movable press assembly compresses the second sheet, the pins retract just enough to allow the second sheet to attach to the first for press-forming.

The press-forming of the sandwich is carried out at the temperature strictly necessary for the mutual attachment of the first and second sheet with the resistive wire interposed between the sheets. This involves a significant opacification of the same, which therefore cannot be used until the co-molding is carried out.

The co-molding step, then, allows the lens not only to achieve the necessary mechanical strength, but also allows the resulting product to be transparent, as well as without through openings.

The dependent claims describe preferred variants of the present invention.

### Brief description of the figures

Further objects and advantages of the present invention will become clear from the following detailed description of an example of its embodiment (and its variants) and from the attached drawings given purely by way of non-limiting explanation, in which:
Figure 1 shows an exploded view of components of the product obtained and of the means for making the product;
Figure 2 shows a side view of a variant of a component of Figure 1;
Figure 3 shows an example of a flow chart representative of the method object of the present invention.

The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of the present application as described below.

### Detailed description of preferred embodiments

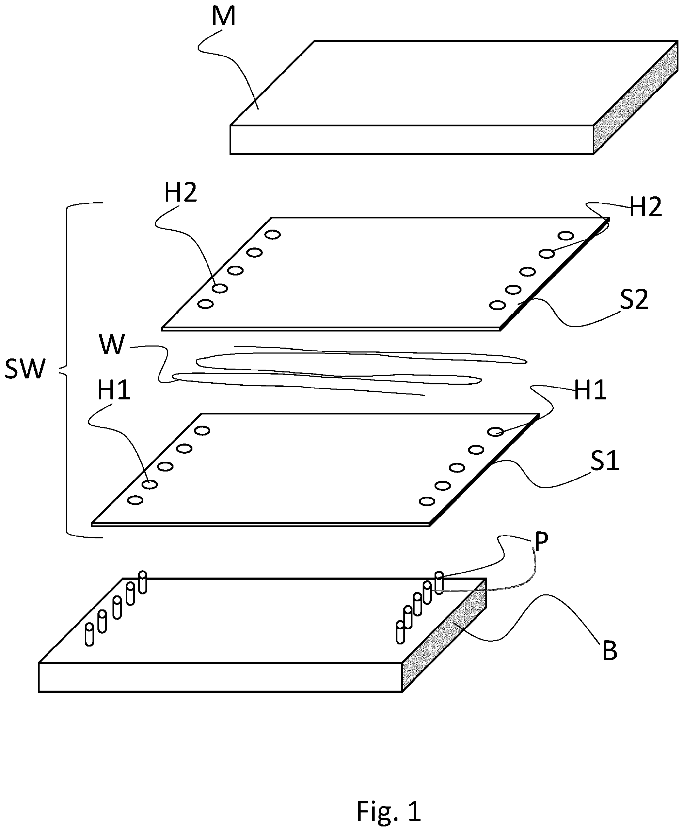

Figure 1 shows
- the support plate B defining the bench of a hot press,
- the mobile unit M of the press arranged to exert pressure on the press bench, compressing what is placed between the bench and the mobile unit.

The support plate B comprises a plurality of long-limbed elements P which project approximately perpendicularly from the surface of the support plate. These elements are hereinafter referred to as pins.

They are arranged in such a way as to provide the support for the resistive wire W which is subsequently applied and pulled on the pins.

According to Figure 1, two pre-perforated sheets of polycarbonate S1 and S2 are prepared, with openings H1 and H2 arranged so as to fit onto the support plate B with the pins passing through the respective openings H1 and H2.

According to the manufacturing method of the present invention, the first sheet S1 is fitted onto the support plate B, subsequently the resistive wire W is arranged on the pins so as to define a heating coil. Subsequently, the second sheet S2 is fitted to create a sandwich with the resistive wire placed between the first and the second sheet. The mobile unit can include a surface complementary to that of the support plate B and include blind openings to house the pins when the mobile unit is fitted on plate B to perform the press-forming of an intermediate product.

Before the press-forming of the sandwich, which leads to blocking the resistive wire between the two sheets S1 and S2, it is preferable to keep the resistive wire pulled to obtain an optimal arrangement of the coil.

However, it is believed that this solution is not optimal, since for different arrangements of the coil it is necessary to replace both components of the press: bench and mobile unit.

According to a preferred variation of the present invention, the pins are retractable so that the movable unit can remain unchanged with respect to pin positioning.

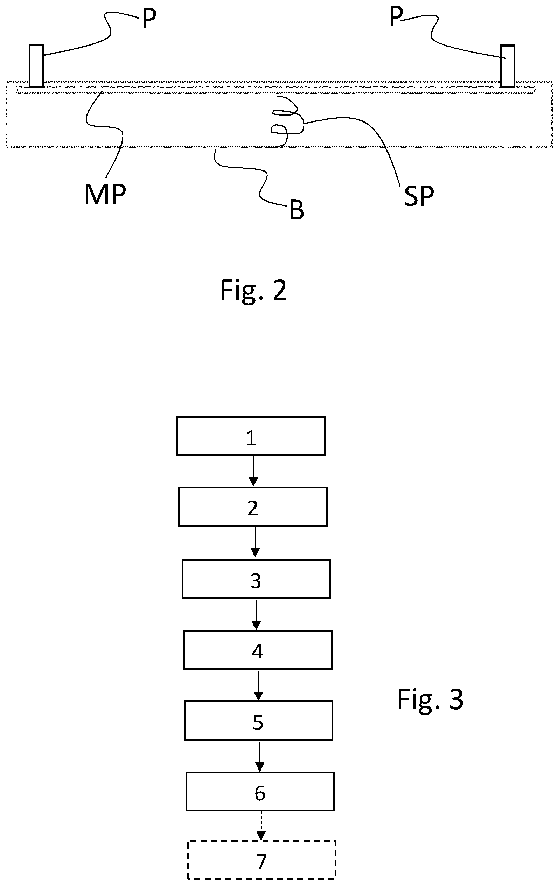

The pins are preferably loaded by respective metal springs. Alternatively, the pins are stably associated with a movable plate MP, see figure 2, loaded by one or more metal springs SP which press the movable plate against the inoperative face of the support plate B.

The winding of the resistive wire on the pins is preferably carried out by means of a robotic arm, but any other system is admissible. For this purpose, it is advisable that the mobile unit of the press can be raised or rotated sufficiently to allow the winding of the resistive wire on the pins.

The press is preferably hydraulic and at least one of the two components between the bench and the mobile unit includes an electrical resistance to bring the sandwich to a temperature strictly sufficient for mutual attachment of the sheets.

During the press-forming operation, the support plate B is kept at about 40°, while the mobile unit is kept at about 150°C. This high temperature is used to overcome the glass transition of the polycarbonate of the two sheets S1, S2 and to obtain the fusion of the two films in about 10 seconds at a pressure of 10 tons. In general, this temperature is chosen to obtain the attachment of the sheets in 5 - 20 seconds. During the co-molding operation, the temperatures of the molds are in line with those of the polycarbonate (about 100/120°C) while the temperature of the material and injection pressures are adjusted according to the size of the lens to be made.

Sheets S1, S2 are substantially thin films with thickness ranging from a minimum of 125pm to a maximum of 500pm.

The relative dimensions and thicknesses can be varied in relation to the application and the two sheets do not necessarily have the same thickness (eg. 125+ 125 pm).

Obviously, as the thickness of the sheets increases, the press-forming times can increase. However, it is preferred to maintain the same temperature of 150°C as indicated above for the above reasons.

Co-molding can be carried out on only one of the faces of the sandwich or two consecutive co-molding procedures can be carried out to cover both faces of the sandwich obtained in the previous steps.

The increased thickness of the lens with co-molding is of the order of a few tenths of a millimeter up to more than one millimeter.

In the case of co-molding on one side only, it is preferable to work with two different thicknesses. For example, if the sheet S1 has a thickness of 125um and S2 has a thickness of 350um, then it is advisable to carry out the co-molding at least on the thinnest side, that is to say on S1, keeping the side defined by S2 "free" that is not coated by means of co-molding. The co-molding on both sides is advantageous as it guarantees a greater symmetry of the lens with respect to the internal resistance, ensuring a better distribution of heat in the same. Furthermore, the co-molding on both sides makes it possible to create more or less complex geometries, such as dome-shaped, to better integrate into portions of complex objects such as, for example, the body of a vehicle. Furthermore, considering that the lens is usually glued to a frame (box or support), a greater thickness between the internal resistance and the bonding surface compensates for any thermal mis-matches during product operation, thus avoiding any detachment between frame and lens.

Advantageously, the present invention has very low process costs, is fast and reliable.

Advantageously, the present invention is flexible, since the section of the resistive wire W can be varied between 30 and 300pm and the thicknesses of the sheets can be varied to obtain polycarbonate sandwiches with different mechanical properties.

It is worth highlighting that both the support plate and the mobile unit were shown as planar.

However, a moderate curvature of both components can be expected, while remaining perfectly complementary to each other.

A curvature can be imposed on the sandwich even after the relative press-forming, before the co-molding procedure.

Obviously, the mold for carrying out the co-molding must be suitably formed to accommodate a curved sandwich.

As described above, the optical properties are restored with co-molding, therefore, an intermediate thermo-forming that would further opacify the sandwich is not a problem.

The lens obtained is used in the automotive sector, for the production of lenses used for advanced driving systems (ADAS) and autonomous driving (LIDAR) but can be extended to more sectors such as, for example, aerospace, naval, medical and home automation.

Implementation variants of the described non-limiting example are possible, without however departing from the scope of protection of the present invention, including all the equivalent embodiments for a person skilled in the art, to the content of the claims.

From the above description, the person skilled in the art is able to realize the object of the invention without introducing further construction details.

## Claims

1. A method for manufacturing a radar or Lidar protective lens comprising the following steps:
- preparation of a matrix of pins (P) projecting from a support plate (B) defining a bench of a press,
- arranging a first pre-drilled polycarbonate sheet (S1) so that the pins pass through corresponding passing through openings (H1) of the first sheet,
- laying a resistive wire (W) on the pins in order to create an electric coil,
- arranging a polycarbonate second sheet (S2), superimposed on the first sheet, creating a sandwich (SW) with the first sheet and the resistive wire,
- press-forming of the sandwich by means of a heated mobile unit (M) equipped with a surface complementary to the sandwich (SW) and possibly to the pins (P) that project beyond the sandwich or equipped with a flat surface and wherein the pins are retracted into the support plate,
- co-molding of the sandwich in order to coat a first face of the sandwich and to make the finished product uniform, making it transparent and occluding said passing through openings (H1).

2. Method according to claim 1, wherein during the press-forming process, the support plate (B) is kept at about 40° or at room temperature.

3. Method according to claim 1 or 2, wherein during the press-forming process, the mobile unit (M) is brought to a temperature such as to overcome a glass transition of the polycarbonate of the first and second sheets (S1, S2) and to obtain a mutual fusion in about 5 - 20 seconds at a pressure of about 10 tons.

4. A method according to claim 3, wherein said temperature is about 150° C.

5. Method according to any one of the preceding claims, wherein a thickness of said first or second sheet is comprised between 125 and 500pm.

6. Method according to any one of the preceding claims, wherein said sandwich co-molding step is such as to coat one face of the sandwich by increasing the thickness of the lens by a few tenths of a millimeter up to a few millimeters.

7. Method according to any one of the preceding claims, further comprising a further co-molding of the sandwich so as to coat a second face of the sandwich, opposite to the first.

8. Method according to any one of the preceding claims, wherein said resistive wire has a thickness ranging between 30 and 300pm.

9. Method according to any one of the preceding claims, wherein the second polycarbonate sheet (S2) is pre-perforated so that the pins pass through corresponding openings (H2) of the second sheet as well.

## Patentansprüche

1. Verfahren zur Herstellung einer Radar- oder Lidar-Schutzlinse mit folgenden Schritten:
- Vorbereitung einer Matrix aus Stiften (P), die von einer Trägerplatte (B) vorstehen, die eine Bank einer Presse definiert,
- Anordnen einer ersten vorgebohrten Polycarbonatplatte (S1), so dass die Stifte durch entsprechende Durchgangsöffnungen (H1) der ersten Platte hindurchgehen,
- Verlegen eines Widerstandsdrahtes (W) auf den Stiften, um eine elektrische Spule zu erzeugen,
- Anordnen einer zweiten Polycarbonatplatte (S2), die über die erste Platte gelegt wird, wodurch ein Sandwich (SW) mit der ersten Platte und mit dem Widerstandsdraht entsteht,
- Pressformen des Sandwichs mittels einer beheizten mobilen Einheit (M), die mit einer zum Sandwich komplementären Oberfläche (SW) versehen und möglicherweise auf den über das Sandwich hinausragenden Stiften (P) oder mit einer Abflachung ausgestattet ist, und wobei die Stifte in die Trägerplatte eingefahren sind
- Gemeinsames Formen des Sandwichs, um eine erste Seite des Sandwichs zu beschichten und das fertige Produkt gleichmäßig zu herstellen, es transparent zu machen und die Durchgangsöffnungen (H1) abzuschatten.

2. Verfahren nach Anspruch 1, wobei die Trägerplatte (B) während des Pressformvorgangs auf etwa 40° oder auf Raumtemperatur gehalten wird.

3. Verfahren nach Anspruch 1 oder 2, wobei während des Pressformvorgangs wird die bewegliche Einheit (M) auf eine Temperatur gebracht, um einen Glasübergang des Polycarbonats der ersten und zweiten Platten (S1, S2) zu überwinden und eine gegenseitige Fusion in ca. 5-20 Sekunden bei einem Druck von ca. 10 Tonnen zu erhalten.

4. Verfahren nach Anspruch 3, wobei die Temperatur etwa 150 °C beträgt.

5. Verfahren nach einem der vorhergehenden Ansprüche, wobei eine Dicke der ersten oder zweiten Platte zwischen 125 und 500 µm liegt.

6. Verfahren nach einem der vorhergehenden Ansprüche, wobei der Schritt des gemeinsamen Formens des Sandwichs darin besteht, eine Seite des Sandwichs zu beschichten, indem die Dicke der Linse um einige Zehntel Millimeter bis zu einigen Millimetern erhöht wird.

7. Verfahren nach einem der vorhergehenden Ansprüche, außerdem einen weiteren Co-Formen des Sandwichs umfassend, um eine zweite Seite des Sandwichs zu beschichten, die der ersten gegenüberliegt.

8. Verfahren nach einem der vorhergehenden Ansprüche, wobei der Widerstandsdraht eine Dicke im Bereich zwischen 30 und 300 µm aufweist.

9. Verfahren nach einem der vorhergehenden Ansprüche, wobei die zweite Polycarbonatplatte (S2) vorperforiert wird, so dass die Stifte auch durch entsprechende Öffnungen (H2) der zweiten Platte hindurchgehen.

## Revendications

1. Procédé de fabrication d'une lentille de protection radar ou Lidar comprenant les étapes suivantes:
- préparer une matrice de pivots (P) dépassant d'un plateau de support (B) définissant un banc d'une presse,
- disposer une première feuille de polycarbonate pré-percée (S1) de manière à ce que les pivots passent à travers des ouvertures traversantes correspondantes (H1) de la première feuille,
- poser un fil résistif (W) sur les pivots afin de créer une bobine électrique,
- disposer une deuxième feuille de polycarbonate (S2), superposée à la première feuille, créant un sandwich (SW) avec la première feuille et le fil résistif,
- mouler le sandwich au moyen d'une unité mobile chauffée (M) équipée d'une surface complémentaire au sandwich (SW) et éventuellement des pivots (P) dépassant du sandwich ou équipés d'une surface plane et dans lequel les pivots sont rétractées dans la plaque de support,
- co-mouler le sandwich afin d'enrober une première face du sandwich et d'uniformiser le produit fini, le rendre transparent et obstruer lesdites ouvertures traversantes (HI).

2. Procédé selon la revendication 1, dans lequel pendant le processus de moulage sous pression, la plaque de support (B) est maintenue à environ 40° ou à température ambiante.

3. Procédé selon la revendication 1 ou 2, dans lequel pendant le processus de moulage sous pression, l'unité mobile (M) est porté à une température telle à vaincre une transition vitreuse du polycarbonate des première et deuxième feuilles (S1, S2) et à obtenir une fusion mutuelle en 5 à 20 secondes environ à une pression d'environ 10 tonnes.

4. Procédé selon la revendication 3, dans lequel ladite température est d'environ 150°C.

5. Procédé selon l'une quelconque des revendications précédentes, dans lequel une épaisseur de ladite première ou deuxième feuille est comprise entre 125 et 500 µm.

6. Procédé selon l'une quelconque des revendications précédentes, dans lequel ladite étape de co-moulage du sandwich est telle qu'elle enrobe une surface du sandwich en augmentant l'épaisseur de la lentille de quelques dixièmes de millimètre jusqu'à quelques millimètres.

7. Procédé selon l'une quelconque des revendications précédentes, comprenant en outre un co-moulage supplémentaire du sandwich de manière à enrober une deuxième surface du sandwich, opposée à la première.

8. Procédé selon l'une quelconque des revendications précédentes, dans lequel ledit fil résistif a une épaisseur comprise entre 30 et 300 µm.

9. Procédé selon l'une quelconque des revendications précédentes, dans lequel la deuxième feuille de polycarbonate (S2) est pré-perforée de manière à ce que les pivots passent également à travers les ouvertures correspondantes (H2) de la deuxième feuille.
